# EUROPEAN PATENT APPLICATION

(11) **EP 1 300 667 A1**
(43) Date of publication of application: **09.04.2003**
(21) Application number: 01947911.2
(22) Date of filing: 06.07.2001
(51) Int. Cl.: G01M 11/00, G01J 1/00

(54) **UNEVEN LIGHT INTENSITY DISTRIBUTION INSPECTING APPARATUS AND UNEVEN LIGHT INTENSITY DISTRIBUTION INSPECTING METHOD**

(30) Priority: 07.07.2000 JP 2000207311
(71) Applicant: Sony Corporation, Tokyo 141-0001 (JP)
(72) Inventor: SAITO, Etsuro, Minato-ku, Tokyo 108-0073 (JP); MOTOMURA, Yuuichi, Shinagawa-ku, Tokyo 141-0001 (JP)
(74) Representative: Melzer, Wolfgang, Dipl.-Ing.
(86) International application number: JP0105921
(87) International publication number: WO02004913

(57) **Abstract**

In the present invention, an image print mask 12H is photographed from a side across a light source 13 when the image print mask 12H for adjusting light so that a film is irradiated with the light is irradiated with the light, a luminance signal of the image print mask 12H is detected based on the photographed image on the image print mask 12H to create a luminance level waveform pattern 113A or 113B according to the luminance signal, and the luminance level waveform pattern 113A or 113B is displayed as the quantity-of-light unevenness of the light with which the image print mask 12H is irradiated, so that the luminance level waveform pattern 113A or 113Ba can make the user visually recognize the state of quantity-of-light unevenness of the light with which the image print mask 12H is irradiated.

## Description

### Technical Field

The present invention relates to a quantity-of-light unevenness inspection apparatus and a quantity-of-light unevenness inspection method, and is suitably applied to printers (development devices) for movie films for example.

### Background Art

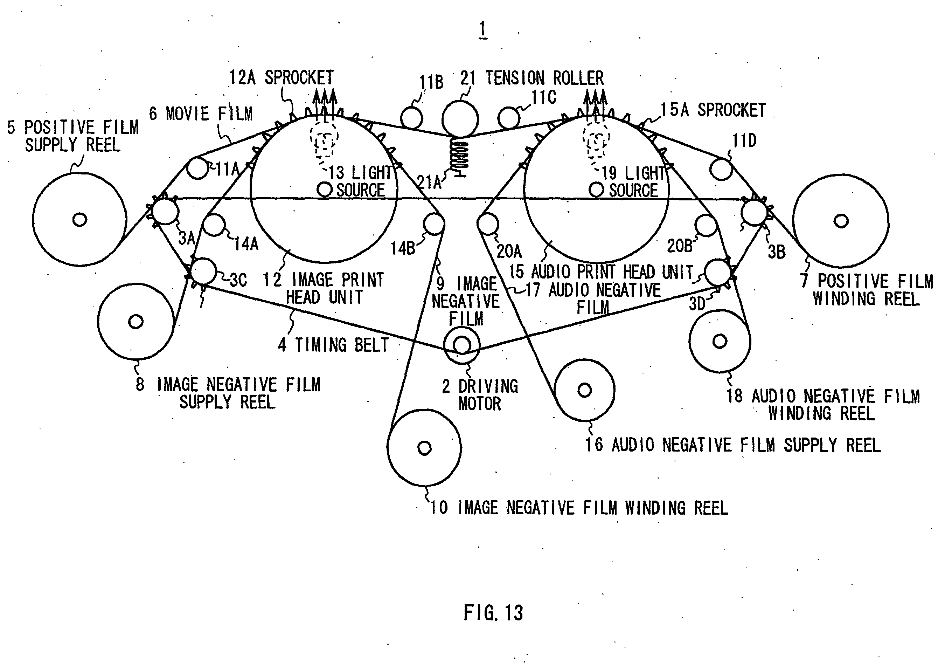

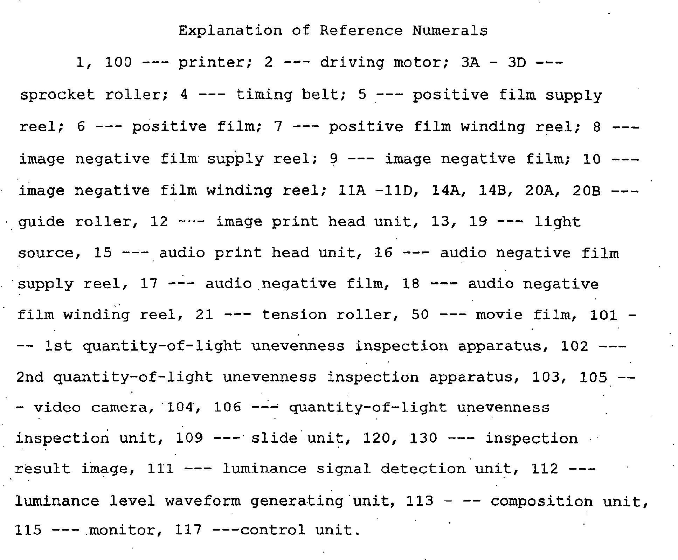

Heretofore, as shown in Fig. 13, in a printer 1 which develops a movie film, sprocket rollers 3A - 3D are rotated clockwise by a timing belt 4 as a driving motor 2 rotates clockwise.

In this case, the sprocket roller 3A fits in the perforations of a movie film 6 which is an undeveloped positive film, drawn from a positive film supply reel 5, and the sprocket roller 3B fits in the perforations of the movie film 6 which is to be wounded onto a positive film winding reel 7.

Similarly, the sprocket roller 3C fits in the perforations of an image negative film 9 drawn from an image negative film supply reel 8, and the sprocket roller 3D fits in the perforations of an audio negative film 17 which is to be wounded onto an audio negative film winding reel 18.

That is, in the printer 1, the undeveloped movie film 6 is drawn from the positive film supply reel 5 as the sprocket rollers 3A and 3B rotates by means of the driving motor 2, and then is wounded onto the positive film winding reel 7 via a guide roller 11A, image print head unit 12, guide roller 11B, tension roller 21, guide roller 11C, audio print head unit 15, and guide roller 11D.

At the same time, in the printer 1, the image negative film 9 is wounded from the image negative film supply reel 8 as the sprocket roller 3C rotates, and then is wounded onto the image negative film winding reel 10 via a guide roller 14A, image print head unit 12, and guide roller 14B.

Therefore, with the perforations of the image negative film 9 and movie film 6 superimposed, the printer 1 lets the movie film 6 travel on the image negative film 9 in a contact state, with the sprocket 12A of the image print head unit 12 fit in the perforations of the superimposed films 9, 6.

Then, the printer 1 adjusts the irradiation area of light from a light source 13 located inside the image print head unit 12 by means of a window-shaped image print mask provided on the periphery across the light source 13 so that the light from the light source 13 is radiated onto the movie film 6 through the image negative film 9, thus transcribing the images of successive frames of the image negative film 9 onto the movie film 6 in sequence.

At the same time, in the printer 1, the audio negative film 17 is drawn from the audio negative film supply reel 16 as the sprocket roller 3D rotates, and then is wounded onto the audio negative film winding reel 18 through a guide roller 20A, audio print head unit 15, and guide roller 20B.

Therefore, with the perforations of both the audio negative film 17 and movie film 6 superimposed, the printer 1 lets the movie film 6 travel on the audio negative film 17 in a contact state, with the sprocket 15A of the audio print head unit 15 fit in the perforations of the superimposed films 17, 6.

Then, the printer 1 adjusts the irradiation area of light from the light source 19 placed inside the audio print head unit 15 with a window-shaped image print mask provided on the periphery across the light source 19 so that the light from the light source 19 is radiated onto the movie film 6 through the audio negative film 17, thus transcribing the digital audio data and analog audio signals of the audio negative film 19 onto the movie film 6 in sequence.

Each of the image negative film 9 and audio negative film 17 is made of a base material applied with photographic emulsion, and is placed with the photographic emulsion-applied surfaces having images, digital audio data and analog audio signals recorded thereon, facing upward. Similarly to the image negative film 9 and audio negative film 17, the movie film 6 is also made of a base material applied with photographic emulsion, and is placed with the photographic emulsion-applied surface on which images, digital audio data and analog audio signals should be transcribed, facing downward.

It means that it is preferable that the movie film 6, and the image negative film 9 and audio negative film 17 are placed in a contact state with the photographic emulsion-applied surfaces facing each other. Therefore, in the printer 1 it is designed such that the movie film 6 makes an optimum contact with the image negative film 9 and audio negative film 17 by means of a tension adjustment spring 21A attached to the tension roller 21, so that a final desired movie film can be produced by developing the undeveloped movie film 6 having images, digital audio data and analog audio signals transcribed thereon.

In such a printer 1 constructed as described above, the irradiation area of light from the light source 13 located inside the image print head unit 12 is to be adjusted by a window-shaped image print mask, which has, however, often causes the irradiation area to have unevenness in the quantity of light (this is called "quantity-of-light unevenness" hereinafter) due to the position and state of a fiber optical cable (not shown) leading the light to the image print mask from the light source 13 through the fiber optical cable, the irradiation area of the light being adjusted by the image print mask.

In such a case, the printer 1 should actually repeat process of carrying out transcription using a test film in place of a movie film 6, developing the resultant test film, and checking the images, digital audio data and analog audio signals transcribed on the test film, until quantity-of-light unevenness does not have adverse effects (as to images, such occurrences as patches in luminance and color slippage, etc., and as to digital audio data and analog audio signals, deterioration in the audio quality of reproduced sounds due to distortion in reproduced waveforms).

As described above, the printer 1 needs development processes to check the actual results of transcription with the use of a test film, which presents a problem in which it takes a long time to just inspect quantity-of-light unevenness.

### Disclosure of the Invention

This invention has been made in consideration of the above points, and is intended to propose a quantity-of-light unevenness inspection apparatus and a quantity-of-light unevenness inspection method that may make it possible to easily inspect in a short time quantity-of-light unevenness of the light irradiating a film by a light source, for performing the transcribing process on the film.

In order to solve the subject matter, in the present invention, an opening in a given shape is photographed from a side across a light source when the opening for adjusting light so that a film is irradiated with the light, is irradiated with light from the light source, a luminance signal is detected at the opening based on the photographed image of the opening to create a luminance level waveform pattern according to the luminance signal, and the luminance level waveform pattern is displayed as unevenness in the quantity of light with which the opening is irradiated, so that the luminance level waveform pattern can make the user visually recognize the state of unevenness in the quantity of light with which the opening is irradiated.

### Brief Description of the Drawings

Fig. 1 is a schematic diagram showing the structure of a movie film.
Fig. 2 is a schematic diagram showing the construction of a printer of the present invention.
Fig. 3 is a schematic diagram showing the cross sectional structure of an image print head unit.
Fig. 4 is a schematic diagram showing the cross sectional structure of an audio print head unit.
Fig. 5 is a schematic perspective diagram showing the positional relationship between a video camera and an image print mask.
Fig. 6 is a block diagram showing the construction of the first quantity-of-light unevenness inspection apparatus.
Fig. 7 is a schematic diagram used in explaining the voltage level detection of luminance signals in the 1-line mode.
Fig. 8 is a schematic diagram showing an inspection result image in the 1-line mode displayed on the monitor.
Fig. 9 is a schematic diagram used in explaining the voltage level detection of luminance signals in the integral mode.
Fig. 10 is a schematic diagram used in explaining the changing of an integral range with a metering range setup switch.
Fig. 11 is a schematic diagram showing an inspection result image in the integral mode displayed on the monitor.
Fig. 12 is a flowchart showing the procedure for quantity-of-light unevenness inspection processing.
Fig. 13 is a schematic diagram showing the construction of a conventional printer.

### Best Mode for Carrying Out the Invention

Detailed description is given hereunder on one mode of embodiment of the present invention in reference to the drawings attached.

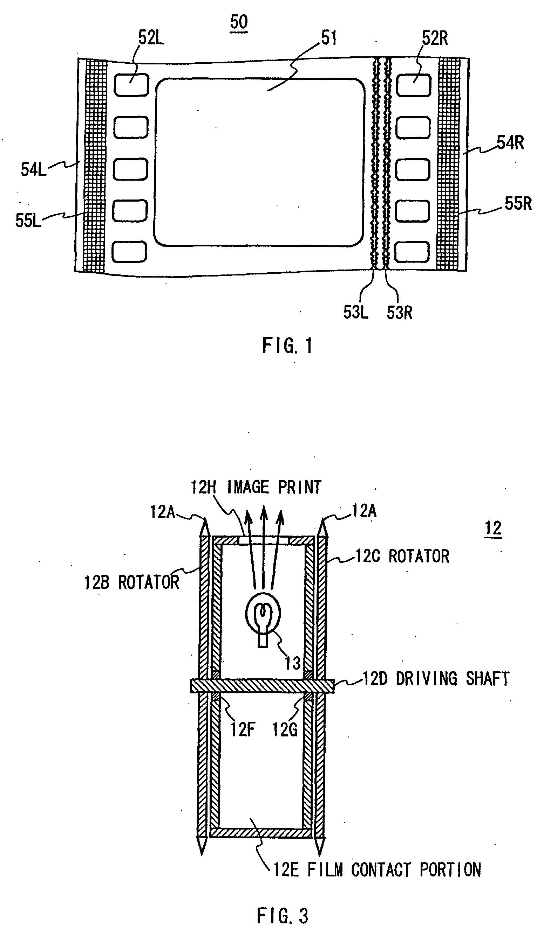

In Fig. 1, reference numeral 50 shows a movie film which is a positive film of an SDDS (Sony Digital Dynamic Sound) format used in playing a movie, which has an image region 51 in which images projected are recorded, perforations 52L, 52R located along both sides of the image region 51 to wind the movie film 50, analog sound tracts 53L, 53R placed linearly along the running direction of the film between the image region 51 and the perforations 52R, and digital sound tracks 55L, 55R for each channel linearly placed along the running direction of the film between the perforations 52L, 52R and the edges 54L, 54R on both sides.

Analog audio signals for the left channel are recorded on the analog sound track 53L, and analog audio signals for the right channel are on the analog sound track 53R, the analog sound tracks 53L and 53R is a light-occulting belt-shaped portion of which the width continuously varies depending on audio waveforms.

Digital audio data for the digitized left channel is recorded on the digital sound track 55L, and digital audio data for the digitized right channel on the digital sound track 55R, the digital sound tracks 55L and 55R formed in bar codes so arranged in a pattern as to intersect the running direction of the film.

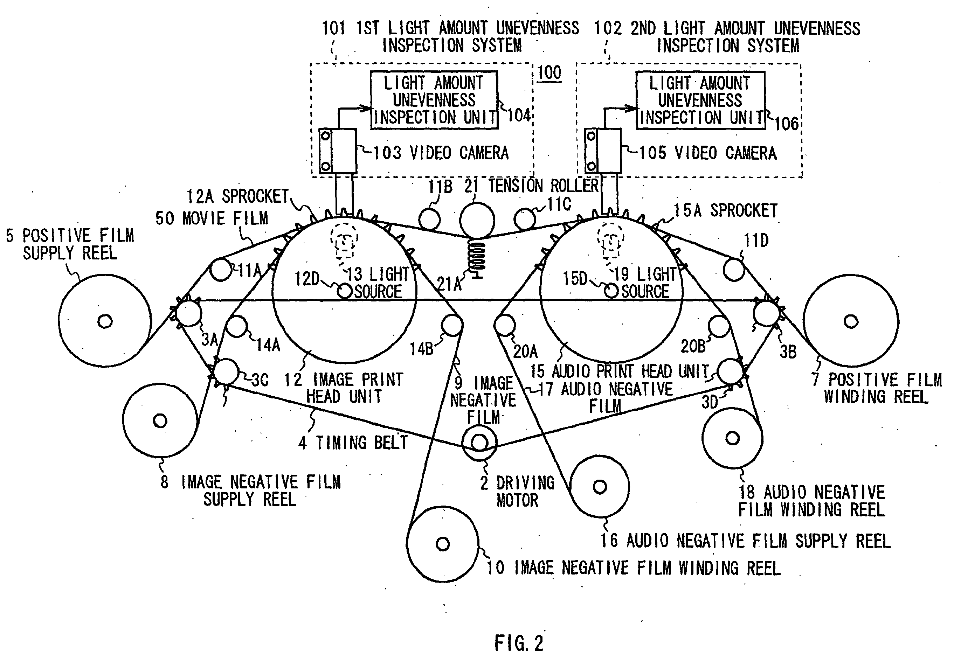

In order to transfer images, analog audio signals, and digital audio data onto the movie film 50 like this, the present invention employs a printer 100 as shown in Fig. 2.

That is, as Fig. 2 shows, which has the same reference numerals as in Fig. 13 for the corresponding parts, the printer 100 incorporates the sprocket rollers 3A - 3D which are driven clockwise by means of the timing belt 4 as the driving motor 2 rotates clockwise.

In this case, the sprocket roller 3A engages with the rows of perforations 52L, 52R of the movie film 50 of an undeveloped positive film drawn out from the positive supply reel 5, and the sprocket roller 3B with the rows of perforations 52L, 52R of the movie film 50 wounded onto the positive film winding reel 7.

On the other hand, the sprocket roller 3C fits into the perforations of the image negative film 9 drawn out from the image negative film supply reel 8, and the sprocket roller 3D with the perforations of the audio negative film 17 wounded onto the audio negative film winding reel 18.

That is, in the printer 100 the undeveloped movie film 50 is drawn out from the positive film supply reel 5 as the sprocket rollers 3A, 3B rotates by the driving motor 2, and is wounded onto the positive film winding reel 7 after running through the guide roller 11A, image print head unit 12, guide roller 11B, tension roller 21, guide roller 11C, audio print head unit 15, and guide roller 11D.

At the same time, in the printer 100 the image negative film 9 is drawn out from the image negative film supply reel 8 with the rotations of the sprocket roller 3C, and is subsequently wounded onto the image negative film winding reel 10 via the guide roller 14A, image print head unit 12, and guide roller 14B.

Consequently, in the printer 100 the movie film 50 can run on the image negative film 9 in a close contact state with it, with the sprocket 12A of the image print head unit 12 simultaneously fitting into each of perforations of the image negative film 9 and movie film 50 in a state wherein the perforations of the image negative film 9 and movie film 50 are superimposed.

Subsequently, in the printer 100 the area irradiated with the light of the light source 13 located inside the image print head unit 12 is adjusted by means of a window-shaped image print mask (described later) placed on the periphery across the light source resulting in the irradiation of the movie film 50 with the light of the light source 13 through the image negative film 9, so that the image of each frame of the image negative film 9 can be transcribed onto the image region 51 (Fig. 1) of the movie film 50.

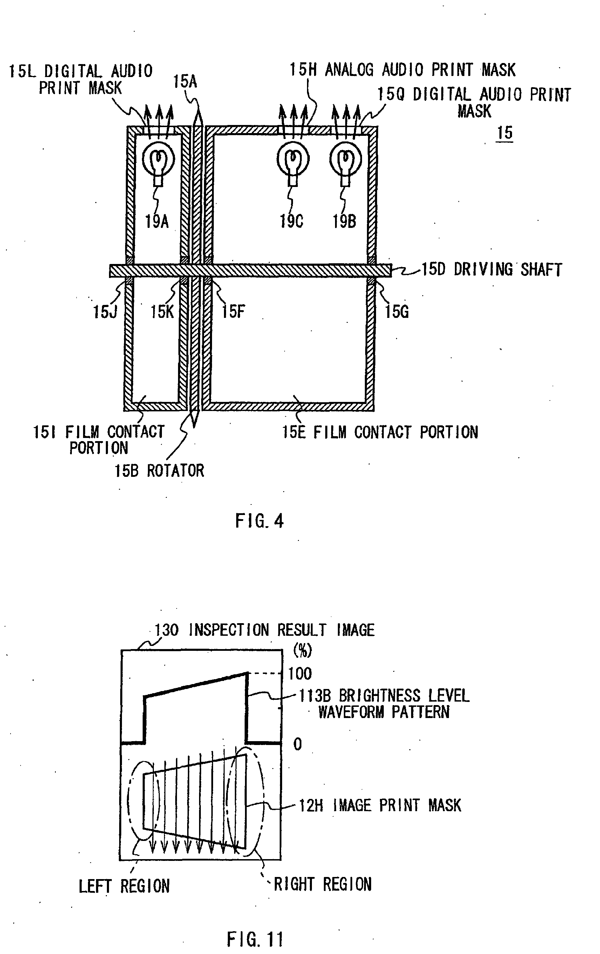

In practice, as shown in Fig. 3, the image print head unit 12 has disk-type rotating parts 12B, 12C provided with a plurality of sprockets 12A on the rim with the same pitch as that of each perforation of the image negative film 9 and movie film 50, so that the image negative film 9 and movie film 50 can travel in close contact with each other by rotating the rotating parts 12B, 12C by means of a driving shaft 12D connected to a motor (not shown in figure).

At this juncture a cylindrical film contact portion 12E inserted through the driving shaft 12D sandwiched between the rotating parts 12B and 12C is supported at the position in a fixed state by means of bearings 12F and 12G independently of the rotating operation of the rotating parts 12B and 12C.

Therefore, in the printer 100 the image negative film 9 and movie film 50 travel in close contact with each other by rotating the rotating parts 12B and 12C of the image print head unit 12 by means of the driving shaft 12D, so that each frame of the image negative film 9 and movie film 50 is exposed to the light from the light source 13 in sequence through the opening of an image print mask 12H located at the position facing the image region 51 of the movie film 50.

At the same time, in the printer 100 the audio negative film 17 is drawn out from the audio negative film supply reel 16 in response to the rotations of the sprocket roller 3D, to be wounded onto the audio negative film winding reel 18 via the guide roller 20A, audio print head unit 15, and guide roller 20B.

As a result, in the printer 100 the movie film 50 can travel on the audio negative film 17 in close contact with it by letting the sprocket 15A of the audio print head unit 15 simultaneously engage with the perforations of the audio negative film 17 and movie film 50 with each perforation of the audio negative film 17 and movie film 50 superimposed.

Subsequently, in the printer 100 the irradiation area exposed to the light of the light source 19 placed inside the audio print head unit 15 is adjusted by a window-shaped analog audio print mask (described later) and a digital audio print mask (described later) located on the periphery across the light source 19, thus irradiating the movie film 50 with the light of the light source 19 through the audio negative film 17, so that analog audio signals and digital audio data recorded on the audio negative film 17 are transcribed in sequence onto the analog sound tracks, 53L, 53R, and digital sound tracks 55L, 55R of the movie film 50.

In practice, as shown in Fig. 4, the audio print head unit 15 has a disk-type rotating part 15B provided with a plurality of sprockets 15A on the rim with the same pitch as that of each perforation of the audio negative film 9 and movie film 50, so that the audio negative film 17 and movie film 50 can travel in close contact with each other by rotating the rotating part 15B by means of a driving shaft 15D connected to a motor (not shown in figure).

At this time a cylindrical film contact portion 15E, to the right side of the rotating part 15B, inserted through the driving shaft 15D, is upheld at the position in a fixed state by means of bearings 15F and 15G supporting the driving shaft 15D, independently of the rotating operation of the rotating parts 15B and 15C.

The film contact portion 15E is provided with a window-shaped analog audio print mask 15H at the position corresponding to the analog sound tracks 53L, 53R (Fig. 1) of the movie film 50 as well as a window-shaped digital audio mask 15Q at the position corresponding to the digital sound track 55R, with light sources 19B and 19C located inside facing the analog audio print mask 15H and digital audio mask 15Q.

Similarly, a cylindrical film contact portion 15I inserted through the driving shaft 15D to the left of the rotating part 15B is upheld at the position in a fixed state by bearings 15J and 15K supporting the driving shaft 15D, independently of the rotating operation of the rotating part 15B.

Also, the film contact portion 15I is provided with a window-shaped digital audio print mask 15L at the position corresponding to the digital sound track 55L (Fig. 1) of the movie film 50 with the light source 19A located inside facing the digital audio print mask 15L.

Therefore, in the printer 100 the audio negative film 17 and movie film 50 travel in close contact with each other by rotating the rotating part 15B of the audio print head unit 15 by means of the driving shaft 15D, so that each frame of the audio negative film 17 and movie film 50 is exposed to the light from the light sources 19A - 19C in sequence through the openings of the digital audio print masks 15L, 15Q, and the analog audio print mask 15H.

The image negative film 9 and audio negative film 17 are produced of a base material applied with photographic emulsion, with the photographic emulsion-applied surfaces arranged facing upward where images, analog sound tracks and a digital sound track are recorded. As are the image negative film 9 and audio negative film 17, the movie film 50 is also produced of a base material applied with photographic emulsion, with the photographic emulsion-applied surface arranged facing downward where images, digital audio data and analog audio signals are to be transcribed.

It means that it is preferable that the movie film 50, and the image negative film 9 and audio negative film 17 are placed in close contact with the photographic emulsion-applied surfaces facing one other. Therefore, in the printer 100 adjustment is made so that the movie film 50 makes an optimum contact with the image negative film 9 and audio negative film 17 by means of the tension adjustment spring 21A fitted on the tension roller 21, thus making it possible to transcribe the images of the image negative film 9, and the digital audio data and analog audio signals of the audio negative film 17 onto the undeveloped movie film 50.

In addition to the above structure, in the printer 100 (Fig. 1) a first quantity-of-light unevenness inspection apparatus 101, a quantity-of-light unevenness inspection apparatus of the present invention, is fitted on the image print head unit 12 in a detachable manner at the position facing the portion where the movie film 50 and image negative film 9 contact each other closely, and a second quantity-of-light unevenness inspection apparatus 102, a quantity-of-light unevenness inspection apparatus of the present invention, on the audio print head unit 15 in a detachable manner at the position facing the portion where the movie film 50 and audio negative film 17 contact each other closely.

The first quantity-of-light unevenness inspection apparatus 101 consists of a video camera 103 as a photographing means and a quantity-of-light unevenness inspection unit 104, and the second quantity-of-light unevenness inspection apparatus 102 of a video camera 105 as a photographing means and a quantity-of-light unevenness inspecting unit 106.

In the first quantity-of-light unevenness inspection apparatus 101 and the second quantity-of-light unevenness inspection apparatus 102, inspection is made in advance on quantity-of-light unevenness of the light applied to the image print mask 12H of the image print head unit 12, digital audio masks 15L, 15Q and analog audio print mask 15H of the audio print head unit 15 by means of the light sources 13 and 19A - 19C with the movie film 50, image negative film 9, and audio negative film 17 removed before actually conducting transcription onto the movie film 50

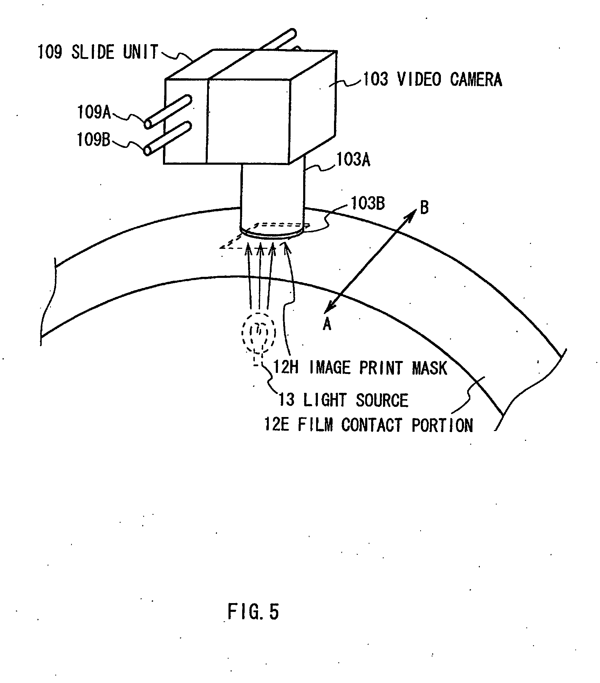

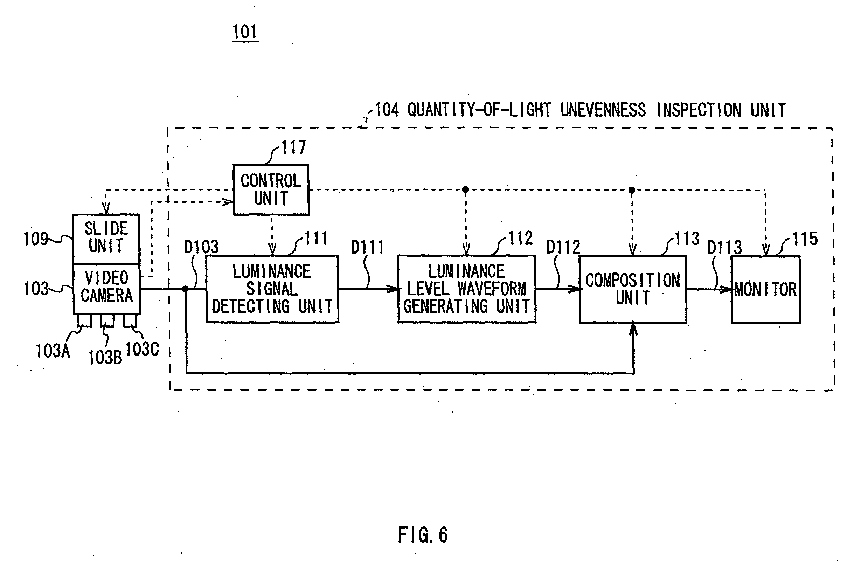

In practice, as shown in Fig. 5, the video camera 103 of the first quantity-of-light unevenness inspection apparatus 101 is placed at the position facing the image print mask 12H of the film contact portion 12E through a lens 103A in such a way that the video camera 103 can move on the film contact portion 12E in the direction of the film width (in the direction toward the arrow mark A or B) guided by the guide shafts 109A, 109B of the slide unit 109 fitted on the video camera 103 under the control of the control unit 117 (described later in reference to Fig. 6) of the quantity-of-light unevenness inspection unit 104.

Thus the video camera 103, arranged at the position facing the image print mask 12H of the film contact portion 12E controlled by the control unit 117, photographs the image print mask 12H when irradiated with light from the light source 13.

As to the video camera 103, a light filter 103B can be attached or detached freely to or from the forefront of the lens 103A so that a different filter can be applied according to the color of light (wavelength) of a light source 13. Accordingly, the most suitable light filter 103B may be used with the video camera 103 according to the color of light (wavelength) of a light source 13.

The video camera 105 of the second quantity-of-light unevenness inspection apparatus 102 is also structured similarly to the video camera 103 of the first quantity-of-light unevenness inspection apparatus 101 so that it can move, as in the video camera 103, in the direction of the film width on the digital audio print masks 15L, 15Q, and the analog audio print mask 15H.

Consequently, the video camera 105 of the second quantity-of-light unevenness inspection apparatus 102, arranged at the position facing the analog audio print mask 15H and digital audio print masks 15L, 15Q, will also shoot the analog audio print mask 15H and digital audio print masts 15L, 15Q when irradiated with the light from the light sources 13 and 19A - 19C.

As shown in Fig. 6, the video camera 103 of the first quantity-of-light unevenness inspection apparatus 101 has a mode selection switch 103A, metering position setup switch 103B, and metering range setup switch 103C fitted on the surface of its housing so that either 1-line mode or integral mode can be selected by means of the mode selection switch 103A.

When the 1-line mode is selected with the mode selection switch 103A operated by a user, the video camera 103 sends image data D103 obtained by photographing the image print mask 12H irradiated with the light from the light source 13 to the luminance signal detecting unit 111 and composition unit 113 of the quantity-of-light unevenness inspection unit 104.

Made up of the luminance signal detecting unit 111, luminance level waveform generating unit 112, composition unit 113, and monitor 115 as a display means, this quantity-of-light unevenness inspection unit 104 is to check quantity-of-light unevenness at the image print mask 12H under the control of the control unit 117 (indicated by broken lines) consisting of a CPU (Central Processing Unit).

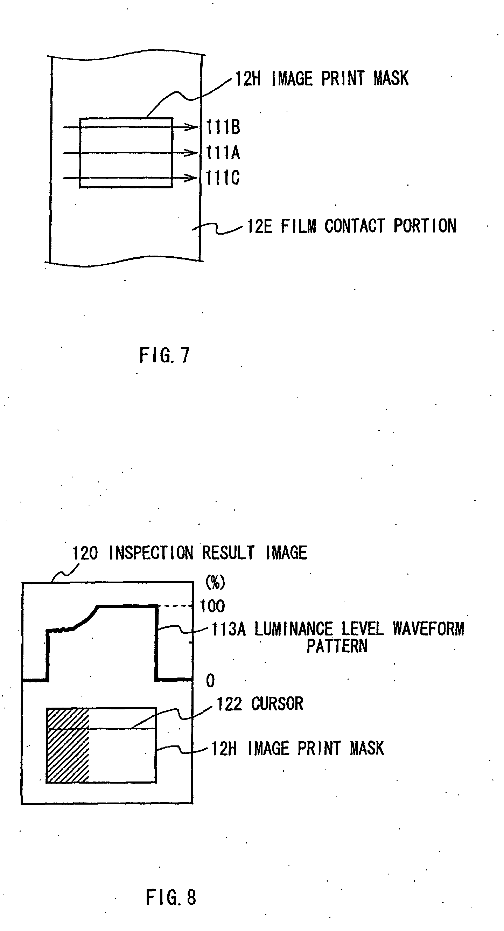

When the 1-line mode is selected, the luminance signal detecting unit 111 detects, as shown in Fig. 7, the voltage level of the luminance signals in one line along the metering position of the arrow mark 111A on the image print mask 12H out of the image data D103 of the whole image print mask 12H, which is sent as detection result data D111 to the luminance level waveform generating unit 112.

With the metering position setup switch 103B of the video camera 103 operated by a user, the luminance signal detecting unit 111 will move a metering position along the arrow marks 111B and 111C to detect the voltage level of the luminance signals on the image print mask 12H, so that the user can detect the voltage level of the luminance signals at a desired metering position.

That is, confirming the metering positions 111A - 111C indicated on the monitor 115, the user can select a desired metering position out of the metering positions 111A - 111C by operating the metering position setup switch 103B.

The luminance level waveform generating unit 112 generates a luminance level waveform pattern indicating the voltage level of luminance signals on the basis of the detection result data D111 in the 1-line mode supplied from the luminance signal detecting unit 111, which is sent to the composition unit 113 as the luminance level waveform data D112 in the 1-line mode.

The composition unit 113 generates composition data D111 by composing the image data D103 directly supplied from the video camera 103 with the luminance level waveform data D112 in the 1-line mode, which is displayed on the monitor 115 as an inspection result image.

That is, as shown in Fig. 8, if the quantity of light level is low in the shaded area within the image print mask 12H when shot by the video camera 103 for example, the monitor 115 displays as an inspection result image 120 a luminance level waveform pattern 113A (the luminance level waveform pattern 113A of a line selected by the cursor 122) composed of the shaded area of a low quantity of light level and the rest of the area of a higher quantity of light level superimposed above the image of the image print mask 12H, so that a user can visually recognize the quantity-of-light unevenness of the image print mask 12H on the spot.

At this time the monitor 115 displays a formulated scale formulating the degree of quantity-of-light unevenness superimposed on the inspection result image 120 with the portion of the highest luminance level within the image print mask 12H as 100%, thereby making it possible for the user to recognize the degree of the quantity-of-light unevenness as a numerical value.

In the above manner the first quantity-of-light unevenness inspection apparatus 101 can let the user visually recognize the quantity-of-light unevenness within the image print mask 12H by means of the inspection result image 120 displayed on the monitor 115 in the 1-line mode.

Thus, since the occurrence of quantity-of-light unevenness in the image print mask 12H of the image print head unit 12 can be recognized, the user can adjust the position and direction of the light source 13 so that there occurs no quantity-of-light unevenness in the image print mask 12H.

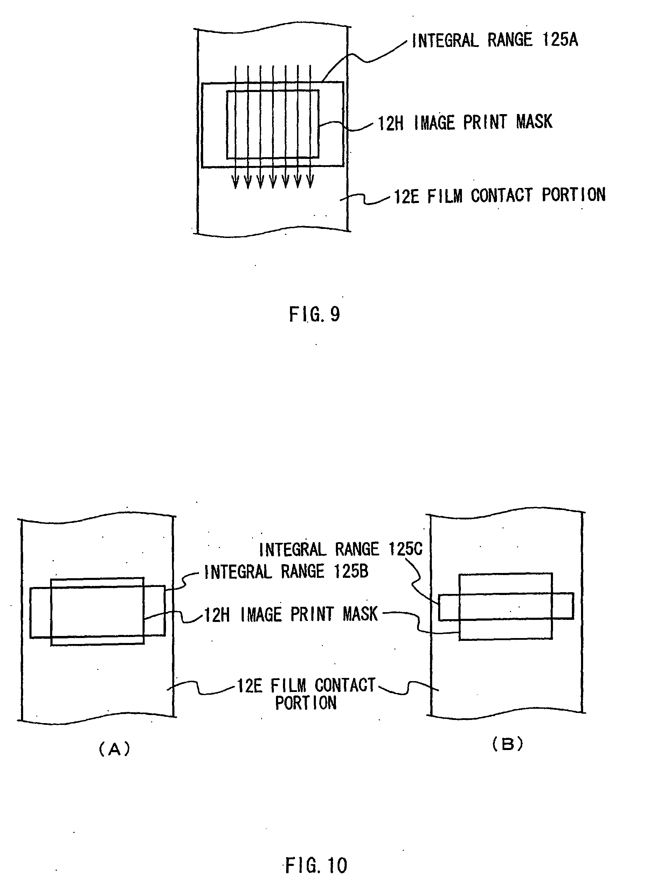

On the other hand, when the integral mode is selected with the mode selection switch 103A operated by a user, as shown in Fig. 9, the luminance signal detecting unit 111 calculates the integral value of luminance signal in the direction (in the running direction of the film) indicated by the arrow marks as a detection region equivalent to the integral range 125A including the whole image print mask 12H of the film contact portion 12E, which are accumulated to detect the voltage level of the luminance signals in the whole integral range 125A, which is sent to the luminance level waveform generating unit 112 as detection result data D111 in the integral mode.

At this juncture, the operation of the metering range setup switch 103 of the video camera 103 by the user lets the luminance signal detecting unit 111 replace the integral range 125A (Fig. 9) on the image print mask 12H with a limited integral range 125B or 125C with its detection region limited as shown in Fig. 10 (A) and (B) .

It means that the user may select a desired metering position out of the integral ranges 125A - 125C by operating the metering range setup switch 103C, confirming the integral ranges 125A - 125C displayed on the monitor 115.

Thus, in the integral range 125A for example, in such a case that foreign lights from other than the given light source 13 enter into its detection region, since it is difficult to detect the correct voltage levels of the luminance signals with the luminance signal detecting unit 111, the integral range 125A is shifted to either the integral range 125B or 125C, consequently making it possible to detect the correct voltage levels of the luminance signals less foreign lights from other than the light source 13.

The luminance level waveform generating unit 112 generates a luminance level waveform pattern indicating the voltage levels of luminance signals based on the detection result data D111 in the integral mode supplied from the luminance signal detecting unit 111, which is transferred to the composition unit 113 as the luminance level waveform data D112 in the integral mode.

The composition unit 113 generates composition data D111 by composing the image data D103 directly supplied from the video camera 103 with the luminance level waveform data D112 in the integral mode, which is displayed on the monitor 115.

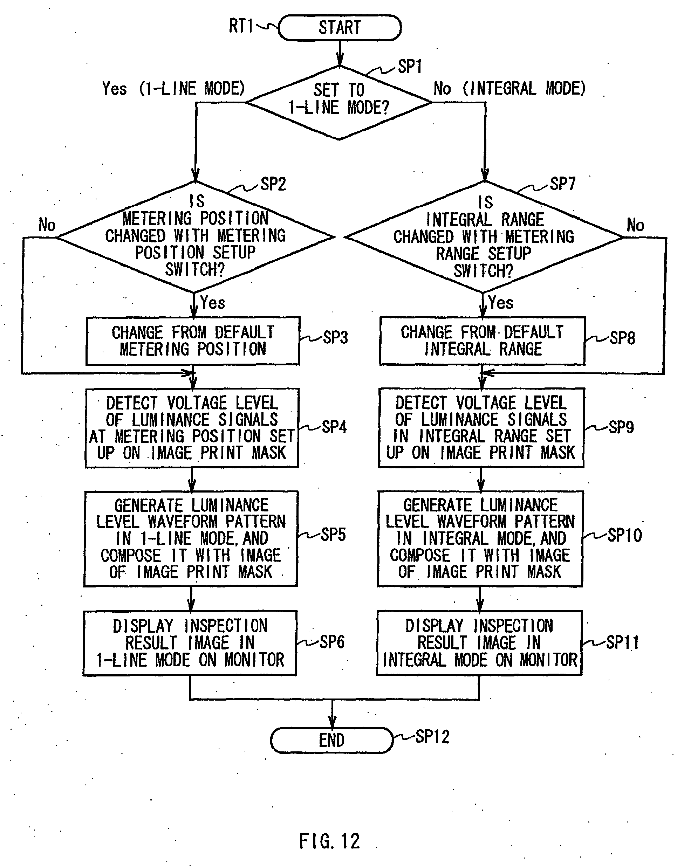

That is, if the shape of the image print mask 12H itself is in the form of a semi-trapezoid as shown in Fig. 11 when shot by the video camera 103 for example, the monitor 115 displays a luminance level waveform pattern 113B composed of the left region of a lower luminance level than that of the right region, superimposed above the image of the image print mask 12H, so that a user can visually recognize on the spot that the image print mask 12H itself is in the form of a semi-trapezoid.

At this time the monitor 115 displays a formulated scale formulating the degree of quantity-of-light unevenness superimposed on an inspection result image 130 with the highest luminance level at the right region within the image print mask 12H as 100%, thereby making it possible for the user to recognize the degree of quantity-of-light unevenness as a numerical value.

Thus, since the user can recognize that the shape of the image print mask 12H of the image print head unit 12 is in the form of a semi-trapezoid, adjustment may be made not to let there be unevenness in quantity of light by replacing it with the image print head unit 12 having an image print mask 12H in a given shape corresponding to the image region 51 of the movie film 50.

Also, when the monitor 115 displays a luminance level waveform pattern 11B as shown in Fig. 11 with the image print mask 12H in the form of a rectangle when shot by the video camera 103, it lets the user visually recognize the existence of quantity-of-light unevenness in the image print mask 12H with a lower luminance level on the left region than on the right region.

Since the second quantity-of-light unevenness inspection apparatus 102 is composed of similar circuits to those of the first quantity-of-light unevenness inspection apparatus 101, quantity-of-light unevenness inspection may be made on the analog audio print mask 15H as well as digital audio print masks 15L and 15Q by a similar method, on which explanation is omitted here.

As described hereinbefore, in the printer 100 inspection is made on the spot on quantity-of-light unevenness of the image print mask 12H of the image print head unit 12, the analog audio print mask 15H as well as digital audio print masks 15L and 15Q of the audio print head unit 15 with the first quantity-of-light unevenness inspection apparatus 101 and the second quantity-of-light unevenness inspection apparatus 102, with adjustment made subsequently in order not to let there occur quantity-of-light unevenness in the foregoing portions. Then, the first quantity-of-light unevenness inspection apparatus 101 and the second quantity-of-light unevenness inspection apparatus 102 are removed, and instead an actual movie film 50, image negative film 9, and audio negative film 17 are installed to perform the printing process.

Next, explanation is given on the aforementioned quantity-of-light unevenness inspection processing sequence in the first quantity-of-light unevenness inspection apparatus 101 using a flowchart in Fig. 12. In the first quantity-of-light unevenness inspection apparatus 101 the above quantity-of-light unevenness inspection processing sequence begins with the starting step of the routine RT1 in Fig. 12, moving to the step SP1.

At the step SP1 the control unit 117 of the quantity-of-light unevenness inspection unit 104 judges whether the 1-line mode is set up with the mode selection switch 103A operated by a user. An affirmative result here, if obtained, means that the 1-line mode has been set up, subsequently the control unit 117 proceeding to the next step SP2.

At the step SP2 the control unit 117 judges whether the metering position of the arrow mark 111A on the image print mask 12H is shifted to another position with the metering position setup switch 103B operated by the user. A negative result here means default, namely the metering position remains at the arrow mark 111A, the control unit 117 proceeding to the next step SP4.

On the other hand, if an affirmative result is obtained at the step SP2, it means that the metering position moves to either the arrow mark 111B or 111C from the default of the arrow mark 111A, the control unit 117 proceeding to the next step SP3.

At the step SP3 the control unit 117 shifts the metering position of the luminance signal detecting unit 111 to either the arrow mark 111B or 111C on the image print mask 12H responding to the operation of the metering position setup switch 103B by the user, and then proceeds to the next step SP4.

At the step SP4 the control unit 117 detects the voltage levels of luminance signals in the 1-line mode at the metering position set up on the image print mask 12H with the luminance signal detecting unit 111, which are sent to the luminance level waveform generating unit 112 as the detection result data D111 in the 1-line mode, subsequently moving to the step SP5.

At the step SP5 the control unit 117 generates a luminance level waveform pattern in the 1-line mode with the luminance level waveform generating unit 112, which is composed with the image of the image print mask 12H to create an inspection result image 120 in the 1-line mode, and proceeds to the next step SP6.

At the step SP5 the control unit 117 lets the monitor 115 display the inspection result image 120 (Fig. 8) in the 1-line mode, and then moves on to the next step SP12 terminating the quantity-of-light unevenness inspection process.

Meanwhile, a negative result, if obtained at the step SP1, indicates that the integral mode is set up, not the 1-line mode, and then the control unit 117 shifts to the next step SP7.

At the step SP7 the control unit 117 judges whether the integral range 125A is changed with the metering range setup switch 103C operated by the user. If an affirmative result is obtained here, it means that the default integral range 125A is changed, and the control unit 117 moves to the next step SP8.

At the step SP8 the control unit 117 changes a detection region for the luminance signal detecting unit 111 to either the integral range 125B or 125C from the default integral range 125A in response to the operation of the metering range setup switch 103C by the user, and proceeds to the next step SP9.

At the step SP9 the control unit 117 detects the voltage levels of the luminance signals in the detection region set up on the image print mask 12H with the luminance signal detecting unit 111, which are transferred to the luminance level waveform generating unit 112 as detection result data D111 in the integral mode, and then moves to the step SP10.

At the step SP10 the control unit 117 generates a luminance level waveform pattern with the luminance level waveform generating unit 112, which is composed with the image of the image print mask 12H to create an inspection result image 130, and then proceeds to the next step SP6.

At the step SP6 the control unit 117 lets the monitor 115 display the inspection result image 130 (Fig. 11) in the integral mode, and moves to the next step SP12 terminating the quantity-of-light unevenness inspection process.

In the structure as described hereinbefore, when the 1-line mode is selected, the first quantity-of-light unevenness inspection apparatus 101 photographs the image print mask 12H irradiated with the light from the light source 13 with the video camera 103, and creates a luminance level waveform pattern 113A in the 1-line mode based on the image data D103 obtained immediately before, which is composed with the image of the image print mask 12H to create an inspection result image 120, which is displayed on the monitor 115.

In this manner the first quantity-of-light unevenness inspection apparatus 101 can let a user visually recognize the quantity-of-light unevenness of the light ranging from the left edge to the right edge on the metering position specified on the image print mask 12H by means of a luminance level waveform pattern. Consequently, the user can easily recognize on the spot whether a luminance level is low either at the left or right edge of the image print mask 12H.

Also, in the case of the integral mode selected, the first quantity-of-light unevenness inspection apparatus 101 shoots the image print mask 12H irradiated with the light from the light source 13 with the video camera 103, and creates a luminance level waveform pattern 113B in the integral mode based on the image data D103 obtained immediately before, which is composed with the image of the image print mask 12H to create an inspection result image 130, which is displayed on the monitor 115.

In this way the first quantity-of-light unevenness inspection apparatus 101 can let the user visually recognize the luminance level waveform pattern 113B in the whole detection region specified on the image print mask 12H. As a result, if the image print mask 12H is in the form of a rectangle, the user can recognize the existence of quantity-of-light unevenness of the light in a detection region on the image print mask 12H, while when the image print mask 12H is in the form of a semi-trapezoid, the user can visually perceive that the form of the image print mask 12H is a semi-trapezoid.

Furthermore, the first quantity-of-light unevenness inspection apparatus 101 can display a formulated scale designating the brightest portion of the luminance level waveform patterns 113A, 113B as 100% along with the luminance level waveform patterns 113A, 113B, so that the user can see a relative change in a luminance level as a numerical value, whereby enabling him to perform the adjusting operation with increased ease by presenting him with a numerical index in conducting the adjustment operation on quantity-of-light unevenness.

According to the above structure, the first quantity-of-light unevenness inspection apparatus 101 shoots the image print mask 12H irradiated with the light from the light source 13, and creates a luminance level waveform pattern 113A or 113B corresponding to the luminance signals of the image of the image print mask 12H obtained just before, which is indicated on the display unit 115 as quantity-of-light unevenness of the light applied to the image print mask 12H, thereby enabling the user to visually recognize the state of quantity-of-light unevenness on the spot.

Thus, in the printer 100 it is possible to adjust the installation position of the light sources 13, 19A - 19C on the spot, obviating quantity-of-light unevenness of the light applied to the image print mask 12H of the image print head unit 12, or quantity-of-light unevenness of the light applied to the analog audio print mask 15H, and digital audio print masks 15L, 15Q of the audio print head unit 15, whereby making it possible to transcribe high-quality images and analog audio signals, and digital audio data onto the movie film 50 by decreasing quantity-of-light unevenness in light within a desired target numerical value.

For additional information, in the foregoing mode of embodiment explanation is given on the case wherein inspection is made on quantity-of-light unevenness based on image data D103 obtained by photographing with the video camera 103 the image print mask 12H, analog audio print mask 15H, and digital audio mask prints 15L, 15Q irradiated with the light from the light sources 13, 19A - 19C with the movie film 50, image negative film 9, and audio negative film 17 not installed on the printer 100. However, the present invention is not limited to it, and inspection may be made on quantity-of-light unevenness based on image data D103 obtained by shooting the image print mask 12H, analog audio print mask 15H, and digital audio mask prints 15L, 15Q irradiated with the light from the light sources 13, 19A - 19C through a transparent film. In other words, inspection may be conducted on quantity-of-light unevenness with a transparent film applied, provided that the luminance level of the image data D103 will not vary.

Also, in the foregoing mode of embodiment explanation is given on the case where the integral value of luminance signals is calculated along the direction of a film traveling in the integral mode. However, the present invention is not limited to it, and the integral value of luminance signals may be calculated along the direction perpendicular to a film running direction in an integral range 125A - 125C.

Furthermore, in the foregoing mode of embodiment explanation is given on the case where the first quantity-of-light unevenness inspection apparatus 101 and the second quantity-of-light unevenness inspection apparatus 102 as quantity-of-light unevenness inspection apparatuses in the present invention are used, fitted on the printer 100 conducting printing on the movie film 50. However, the present invention is not limited to it, and a quantity-of-light unevenness inspection apparatus in the present invention may be used, installed on a variety of other devices such as a cineprojector to project a movie film 50.

According to the present invention described above, a luminance level waveform pattern is generated corresponding to luminance signals by photographing the opening, an opening in a given shape from which to irradiate a film with the light adjusted when irradiated with the light of a light source from the opposite side, and by detecting the luminance signals at the opening based on the image at the opening photographed, the luminance level waveform pattern indicated as the quantity-of-light unevenness of the light applied to the opening, thereby enabling a user to visually recognize on the spot the state of quantity-of-light unevenness of the light applied to the opening, resulting in the realization of a quantity-of-light unevenness inspection apparatus and a quantity-of-light unevenness inspection method that may enable inspecting easily in a short period of time quantity-of-light unevenness of the light applied to a film from light sources so as to perform the transcribing process on the film.

### Industrial Utilization

The quantity-of-light unevenness inspection apparatus and quantity-of-light unevenness inspection method of the present invention are applied to printers which are enable of inspecting unevenness in quantity of light applied to a film material for transcribing process of the film material.

## Claims

1. A quantity-of-light unevenness inspection apparatus, comprising:
photographing means for photographing an opening from a side across a light source when the light from the light source is applied to the opening in a given shape for adjusting light so that a film is irradiated with the light;
luminance signal detecting means for detecting a luminance signal of the opening based on the image of said opening shot by said photographing means;
luminance level waveform pattern creating means for creating a luminance level waveform pattern according to said luminance signal; and
display means for displaying said luminance level waveform pattern as quantity-of-light unevenness of said light with which said opening is irradiated.

2. The quantity-of-light unevenness inspection apparatus according to Claim 1, wherein
said luminance signal detecting means detects a luminance signal for one line at a specified measurement position of said opening based on the image of said opening.

3. The quantity-of-light unevenness inspection apparatus according to Claim 2, wherein
said luminance signal detecting means detects luminance signals for one line at a new measurement position changed by a user with a switching means.

4. The quantity-of-light unevenness inspection apparatus according to Claim 1, wherein
said luminance signal detecting means detects the integral value of the luminance in a fixed detection region in the opening as said luminance signal based on the image of said opening.

5. The quantity-of-light unevenness inspection apparatus according to Claim 4, wherein
said luminance signal detecting means detects the integral value of the luminance in a new detection region changed by a user with a switching means.

6. The quantity-of-light unevenness inspection apparatus according to Claim 1, wherein
said display means overlaps and displays the image of said opening shot by said photographing means and said luminance level waveform pattern.

7. The quantity-of-light unevenness inspection apparatus according to Claim 1, wherein
said display means displays a normalized scale in which a luminance level indicated in the form of said luminance level waveform pattern is relatively and digitized, in correspondence with said luminance level waveform pattern.

8. A quantity-of-light unevenness inspection method, comprising:
a photographing step of photographing an opening from a side across a light source when said opening in a given shape for adjusting light so that a film is irradiated with the light, is irradiated with the light;
a luminance signal creating step of creating a luminance signals of the opening based on the image of said opening photographed from said photographing means;
a luminance level waveform pattern creating step of creating a luminance level waveform pattern according to said luminance signal; and
a display step of displaying said luminance level waveform pattern as quantity-of-light unevenness of said light with which said opening is irradiated.

9. The quantity-of-light unevenness inspection method according to Claim 8, wherein
said luminance signal detecting step detects a luminance signal for one line at a specified metering position of said opening based on the image of said opening.

10. The quantity-of-light unevenness inspection method according to Claim 9, wherein
said luminance signal detecting step detects a luminance signal for one line at a new metering position changed by a user with a switching means.

11. The quantity-of-light unevenness inspection method according to Claim 8, wherein
said luminance signal detecting step detects the integral value of the luminance in a fixed detection region in the opening as said luminance signal based on the image of said opening.

12. The quantity-of-light unevenness inspection method according to Claim 11, wherein
said luminance signal detecting step detects the integral value of the luminance in a new detection region changed by a user with a switching means as said luminance signal.

13. The quantity-of-light unevenness inspection method according to Claim 8, wherein
said display step overlaps and displays the image of said opening shot by said photographing means and said luminance level waveform pattern.

14. The quantity-of-light unevenness inspection method according to Claim 8, wherein
said display step displays a normalized scale in which a luminance level indicated in the form of said luminance level waveform pattern is relatively digitized, in correspondence with said luminance level waveform pattern.
